# EUROPEAN PATENT SPECIFICATION

(11) **EP 1 328 133 B1**
(45) Date of publication and mention of the grant of the patent: **27.02.2008**
(21) Application number: 03250151.2
(22) Date of filing: 10.01.2003
(51) Int. Cl.: H04Q 7/38

(54) **Method and apparatus for reducing premature termination of mobile station LCS procedure during RR operations**
Verfahren und Gerät zur Verringerung frühzeitiger Beendung von positionsabhängigen Diensten während Funkressourcenänderungen
Procédé et appareil pour réduire la terminaison prémature de services positionels pendant changements des ressources radios

(30) Priority: 11.01.2002 US 43926
(43) Date of publication of application: 16.07.2003
(73) Proprietor: Nokia Siemens Networks Oy, 02022 Nokia Siemens Networks (FI)
(72) Inventor: Rantalainen, Timo, 00200 Helsinki (FI)
(74) Representative: Read, Matthew Charles

(56) References cited:
- WO-A-00/76245
- WO-A-01/05185
- "Digital cellular telecommunications system (Phase 2+); Location Services (LCS); (Functional description) - Stage 2 (GSM 03.71 version 8.0.0 Release 1999); ETSI TS 101 724" ETSI STANDARDS, EUROPEAN TELECOMMUNICATIONS STANDARDS INSTITUTE, SOPHIA-ANTIPO, FR, vol. 3-SA2;SMG3, no. V800, October 2000 (2000-10), XP014006570 ISSN: 0000-0001
- "UMTS;Stage 2 functional Specification of Location Services in UTRAN (3GPP TS 25.305 version 3.3.0 Release 1999" ETSI TS 125 305 V3.3.0, September 2000 (2000-09), pages 1-42, XP002192264
- "UNIVERSAL MOBILE TELECOMMUNICATIONS SYSTEM (UMTS); Interlayer Procedures in Connected Mode (3G TS 25.303 VERSION 3.6.0 RELEASE 1999)" ETSI TS 125 303 V3.6.0, December 2000 (2000-12), pages 60-65, XP002205145

## Description

### TECHNICAL FIELD:

These teachings relate generally to wireless communications systems and, more specifically, to procedures for determining a location or a position of a mobile station (MS) within the wireless network (NW).

### BACKGROUND:

The following abbreviations are herewith defined.
- 3G: Third Generation (cellular system)
- A/Gb mode: Mode of operation of MS when connected to the core network via GERAN and the A and/or Gb interfaces
- BSC: Base Station Controller
- BTS: Base Transceiver Station
- CN: Core Network
- CRS: Cell Re-Selection
- CS: Circuit Switched
- DL: Down Link (to the MS)
- EDGE: Enhanced Data rate for Global Evolution
- E-OTD: Enhanced-Observed Time Difference
- GERAN: GSM/EDGE Radio Access Network
- GGSN: Gateway GPRS Support Node
- GMLC: Gateway Mobile Location Center
- GPS: Global Positioning System
- GRA: GERAN Registration Area
- GSM: Global System for Mobile Communications
- GTP: GPRS Tunneling Protocol
- HO: Handover
- IMSI: International Mobile Subscriber Identity
- IP: Internet Protocol
- Iu mode: Mode of operation of MS when connected to the core network via GERAN or UTRAN and the Iu interface
- Iur: A logical interface between two RNC
- Iur-g: A logical interface between two BSCs
- LCS: Location Services
- ME: Mobile Equipment
- MM: Mobility Management
- MS: Mobile Station
- MSC: Mobile Switching Center
- NAS: Non-Access Stratum
- PDCP: Packet Data Convergence Protocol
- PDP: Packet Data Protocol
- PDU: Packet Data Unit
- PS: Packet Switched
- QoS: Quality of Service
- RAB: Radio Access Bearer
- RAN: Radio Access Network
- RANAP: Radio Access Network Application Part
- RNC: Radio Network Controller
- RNTI: Radio Network Temporary Identity
- RR: Radio Resources
- RRC: Radio Resource Control
- RRLP: Radio Resource Location Procedure
- SGSN: Serving GPRS Support Node
- SMLC: Serving Mobile Location Center
- SRNS: Serving RNS
- UE: User Equipment
- UL: Uplink (from the MS)
- UMTS: Universal Mobile Telecommunications System
- URA: UTRAN Registration Area
- UTRAN: Universal Terrestrial Radio Access Network
- VMSC: Visited MSC

Reference can also be made to 3GPP TR 21.905, V4.4.0 (2001-10), Third Generation Partnership Project; Technical Specification Group Services and System Aspects; Vocabulary for 3GPP Specifications (Release 4).

Over the period of a decade the GSM standard has evolved from a basic voice service to a wide variety of speech and data services. In the 3GPP Release 5 the functional split between the GSM/EDGE Radio Access Network (GERAN) and the core network (CN) will be aligned with the functional split between UTRAN and the CN, thereby enabling GERAN to connect to the same 3G core network and to provide the same set of services as UTRAN. This functionality split implies a new architecture for GERAN and significant modifications to the GERAN radio protocols.

Several new interfaces such as Iu and Iur-g are defined for the GERAN architecture. The Iu interface is common between UTRAN and GERAN. An Iu-ps and Iu-cs interface is being considered, where Iu-ps is the interface targeted for the packet switched (PS) domain, and Iu-cs is the interface targeted towards the circuit switched (CS) domain. Both of these interfaces will be supported by the GERAN specifications. The Iur-g is the interface between two GERANs, and supports signaling information between them (note that the Iur-g is currently planned to support only the control plane procedures of Iur).

A Mobile Station (MS) can be attached to the core network through either the Iu-cs or Iu-ps, or through both the Iu-cs and Iu-ps interfaces. The MS can also be attached to the CN through the legacy interfaces A and Gb. As a result, the GERAN Radio Resource Control (RRC) protocol is based on both the GSM Radio Resource (RR) and the UTRAN RRC specifications. The MS can operate in either the A/Gb mode or the Iu mode. The A/Gb mode is defined for the MS when connected to a GERAN with no Iu interface towards the CN. The Iu mode is defined for the MS when connected to a GERAN with Iu interfaces towards the CN.

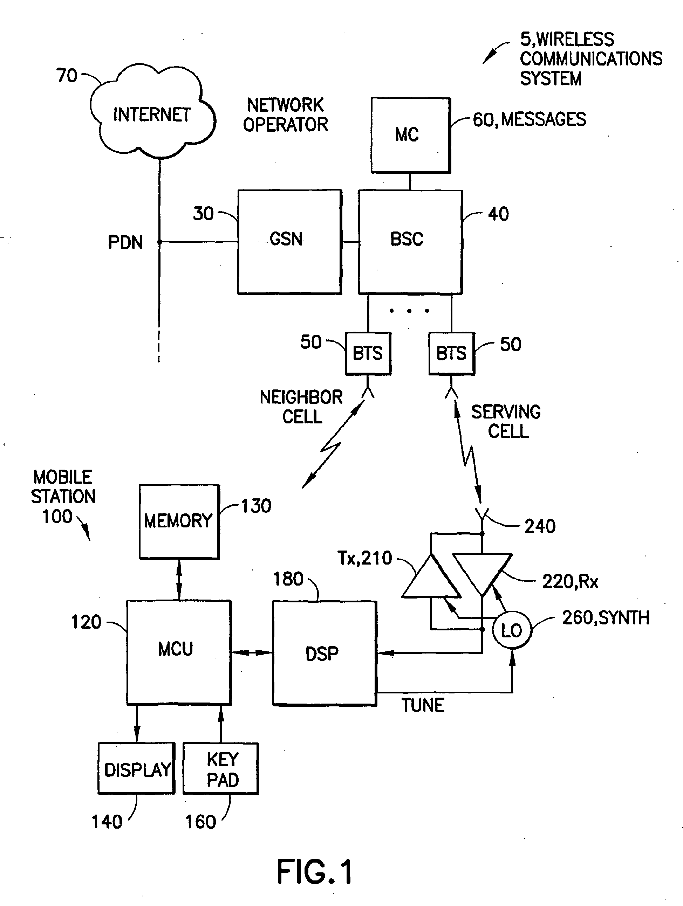

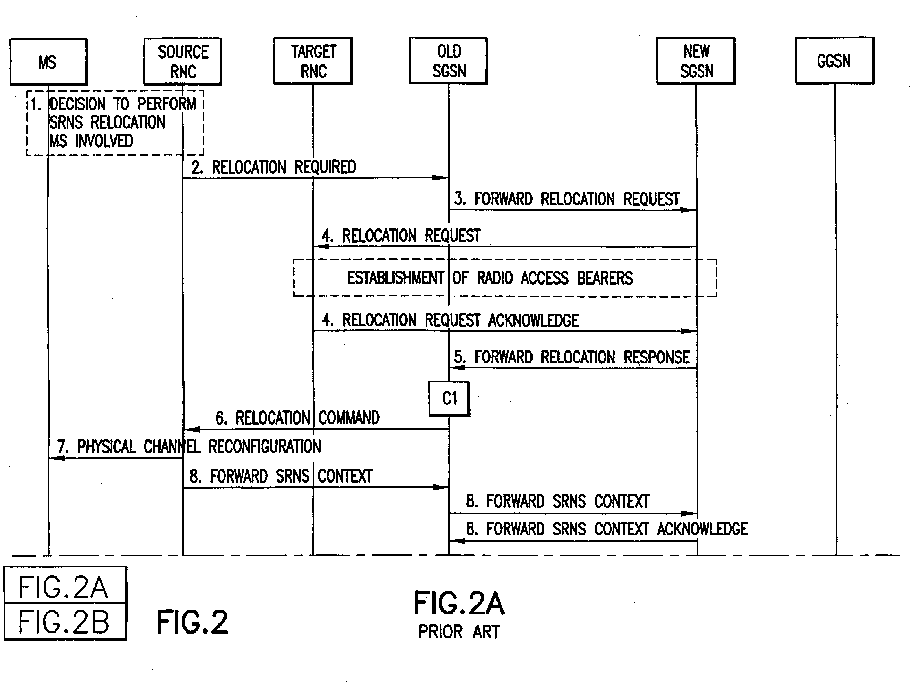

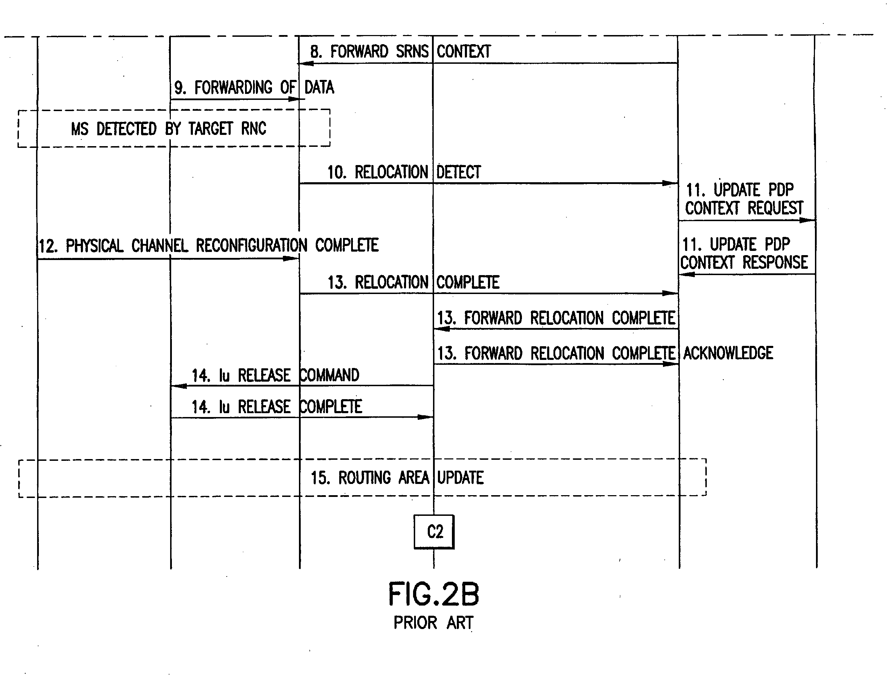

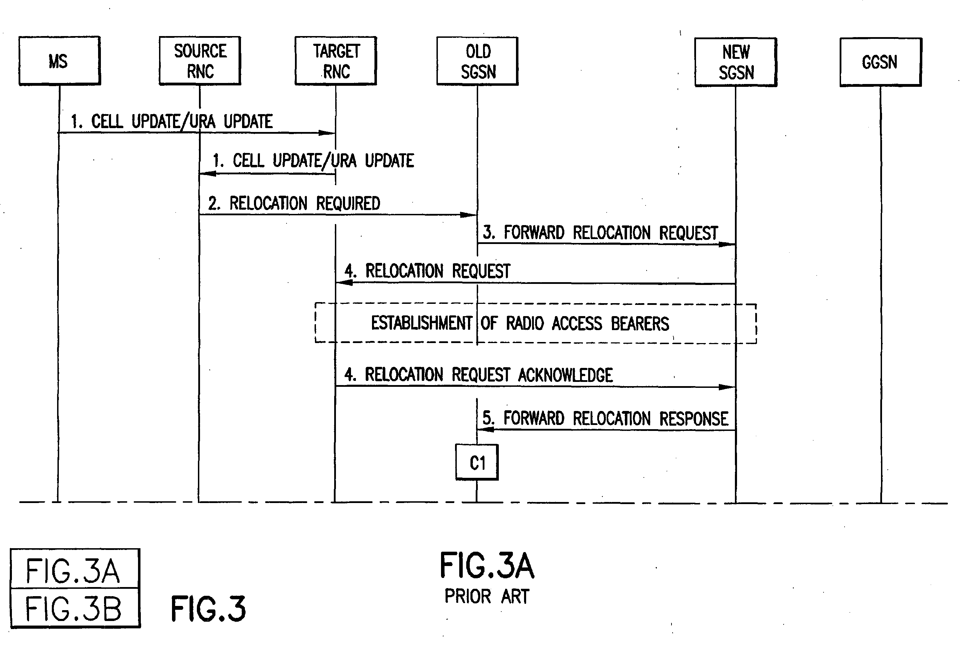

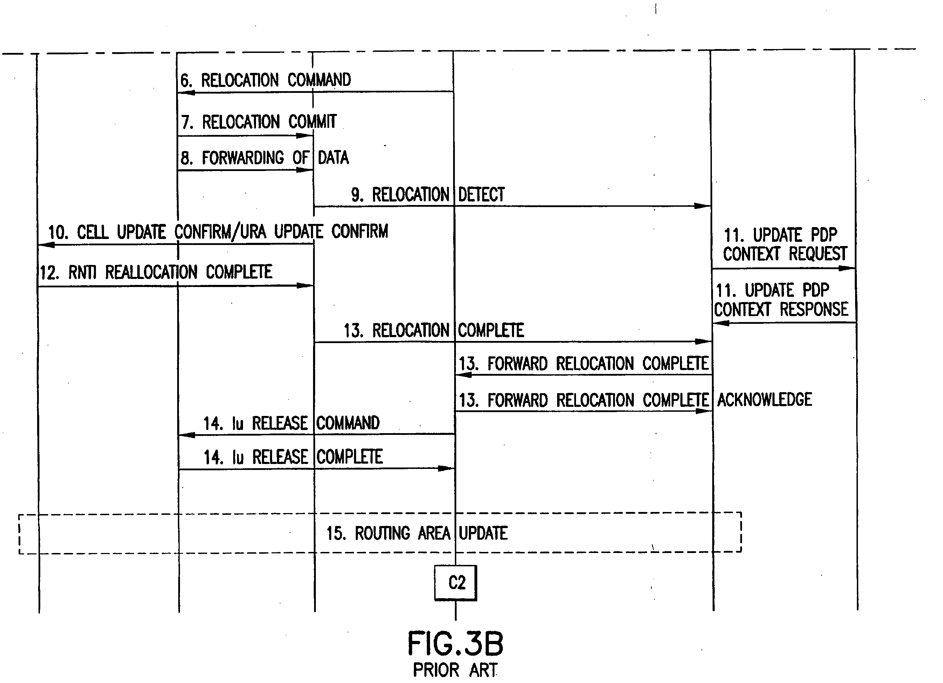

UMTS has a standardized relocation procedure that is expected will be used as well in the GERAN Iu mode. Figs. 1 and 2 illustrate the relocation procedure, and can be found as well in the standard 3G TS 23.060, V4.2.0 (2001-10), Third Generation Partnership Project; Technical Specification Group Services and System Aspects; General Packet Radio Service (GPRS); Service Description; Stage 2 (Release 4). More specifically, Fig. 2 shows the operation of the currently specified Combined Hard Handover and SRNS Relocation procedure for the PS domain. The illustrated sequence is valid for both intra-SGSN SRNS relocation and for inter-SGSN and SRNS relocation. Fig. 3 shows the operation of a Combined Cell /URA Update and SRNS Relocation procedure for the PS domain. This sequence is valid for both intra-SGSN SRNS relocation and for inter-SGSN SRNS relocation. The Cell Update and Relocation procedures have been accepted by standardization committees to be adopted from UTRAN to GERAN Iu mode.

According to current GSM specifications (Release 1998 (R98) and Release 1999 (R99), GSM 03.71), the E-OTD and GPS MS positioning procedures are terminated in the case of handover, or upon the occurrence of some other RR management procedure. More specifically, what is currently specified is that:
The BSC shall terminate any network or MS positioning procedure or any transfer of RRLP assistance data already in progress if inter-BSC or inter-MSC handover is needed and is not precluded by the particular location procedure and its current state.
The BSC shall terminate any network or MS positioning procedure or any transfer of RRLP assistance data already in progress if an intra-BSC handover or other intra-BSC RR management procedure is needed and is not precluded by the particular location procedure and its current state.

As may be appreciated, the current approach results in GPS and E-OTD positioning procedures being terminated in many cases due to HO or some other RR procedure, requiring the VMSC (or the GMLC) to restart the MS positioning procedure. This results in additional delays, as well as in an increased MS power consumption, and the in some cases the entire positioning operation may fail within the time specified by an application.

### SUMMARY OF THE PREFERRED EMBODIMENTS

The foregoing and other problems are overcome, and other advantages are realized, in accordance with the presently preferred embodiments of these teachings.

These teachings pertain to Assisted GPS, E-OTD and other suitable location methods and systems and provide a technique to avoid undesired termination of a LCS procedure due to some RR procedure (e.g., HO or CRS). The LCS process and the supplying of its associated parameters are moved when required from a current serving BSC/RNC/SMLC and MSC/SGSN to a new serving entity with a relocation procedure. These teachings are applicable, for example, to GERAN Iu mode standards as well as to UTRAN standards, and may be applied as well to the GERAN A/Gb mode, while possibly requiring a new interface between BSCs (comparable to the Iur-g interface in the Iu mode) when operating in the A/Gb mode.

A method is disclosed for operating a mobile station in cooperation with a network operator, as is a system including the mobile station and the network operator. The method operates, upon an occurrence of a RR procedure, including HO and CRS, that affects the mobile station, to determine if a location procedure is ongoing in the mobile station and, if it is, to complete the location procedure and to report the measurement results (which may be a failure indication) in a message from the mobile station to a target radio network controller. The location procedure can be, in accordance with an embodiment of this invention, a LCS procedure that is executed during a Combined Hard Handover and SRNS Relocation procedure, for both the PS and CS domains, and applies to both intra-SGSN/MSC SRNS relocation and inter-SGSN/MSC and SRNS relocation. The location procedure can also be, in accordance with another embodiment of this invention, a LCS procedure that is executed during a Combined Cell/URA Update and SRNS Relocation procedure for the PS domain, and also applies to both intra-SGSN SRNS relocation and for inter-SGSN SRNS relocation

For the LCS procedure, the method further sends LCS parameters from a source RNC/BSC to the target RNC/BSC. The LCS parameters in this case are sent in a Source RNC to Target RNC Transparent Container in a Relocation Required message (note should be made that the name of this container is UTRAN specific, and that it may be referred to differently in, for example, GERAN). LCS parameters may also be sent from the source BSC/RNC to the target BSC/RNC in a Relocation Commit (SRNS Contexts) message or, if no Iur(-g) is available, in a Forward SRNS Context message. Note in this case that the reference to Iur-g is GERAN specific, but should not be viewed as being a limitation upon the practice of this invention.

The LCS parameters can include at least one of (i) a requested location accuracy; (ii) a requested location response time; (iii) details pertaining to a currently ongoing location process; and (iv) a GMLC address.

The measurement results message may be sent by the mobile station before or after sending a GERAN/UTRAN Mobility Information Confirm message from the mobile station to the target BSC/RNC.

### BRIEF DESCRIPTION OF THE DRAWINGS

The foregoing and other aspects of these teachings are made more evident in the following Detailed Description of the Preferred Embodiments, when read in conjunction with the attached Drawing Figures, wherein:
Fig. 1 is a block diagram of a wireless communications system that is suitable for practicing these teachings;
Fig. 2 illustrates the operation of a conventional Combined Hard Handover and SRNS Relocation procedure for the PS domain, where the illustrated sequence is valid for both intra-SGSN SRNS relocation and for inter-SGSN and SRNS relocation;
Fig. 3 illustrates the operation of a conventional Combined Cell/URA Update and SRNS Relocation procedure for the PS domain, where the illustrated sequence is valid for both intra-SGSN SRNS relocation and for inter-SGSN SRNS relocation;
Fig. 4 illustrates the operation of the relocation procedure with LCS data for the case of Cell Reselection (PS domain) in accordance with the teachings of this invention; and
Fig. 5 is a logic flow diagram that illustrates an LCS Relocation in an IP RAN architecture in accordance with a further aspect of these teachings.

### DETAILED DESCRIPTION OF THE PREFERRED EMBODIMENTS

Referring first to Fig. 1, there is illustrated a simplified block diagram of an embodiment of a wireless communications system 5 that is suitable for practicing this invention. The wireless communications system 5 includes at least one mobile station (MS) 100, also referred to herein as User Equipment (UE). Fig.1 also shows an exemplary network operator having, for example, a Serving GPRS Support Node (SGSN) 30 for connecting to a telecommunications network, such as a Public Packet Data Network or PDN, at least one base station controller (BSC) 40, and a plurality of base transceiver stations (BTS) 50 that transmit in a forward or downlink direction both physical and logical channels to the mobile station 100 in accordance with a predetermined air interface standard. A reverse or uplink communication path also exists from the mobile station 100 to the network operator, which conveys mobile originated access requests and traffic.

When the MS 100 moves from a cell served by a first BTS 50 to a cell served by another BTS 50, when both are controlled by the same BSC 40, an intra-BSC handover (HO) is executed. However, the MS 100 may also transition between cells served by BTSs 50 that are individually controlled by different BSCs 40. In this case the HO is considered to be an inter-BSC HO.

The air interface standard can conform to any suitable standard or protocol, and may enable both voice and data traffic, such as data traffic enabling Internet 70 access and web page downloads. In the presently preferred embodiment of this invention the air interface standard is a Time Division Multiple Access (TDMA) air interface that supports a GSM or an advanced GSM protocol and air interface, although these teachings are not intended to be limited to TDMA or to GSM or GSM-related wireless systems.

The network operator may also include a suitable type of Message Center (MC) 60 that receives and forwards messages for the mobile stations 100. Other types of messaging service may include Supplementary Data Services and one under currently development and known as Multimedia Messaging Service (MMS), wherein image messages, video messages, audio messages, text messages, executables and the like, and combinations thereof, can be transferred between the network and the mobile station 100.

The mobile station 100 typically includes a microcontrol unit (MCU) 120 having an output coupled to an input of a display 140 and an input coupled to an output of a keyboard or keypad 160. The mobile station 100 may be a handheld radiotelephone, such as a cellular telephone or a personal communicator. The mobile station 100 could also be contained within a card or module that is connected during use to another device. For example, the mobile station 10 could be contained within a PCMCIA or similar type of card or module that is installed during use within a portable data processor, such as a laptop or notebook computer, or even a computer that is wearable by the user.

The MCU 120 is assumed to include or be coupled to some type of a memory 130, including a read-only memory (ROM) for storing an operating program, as well as a random access memory (RAM) for temporarily storing required data, scratchpad memory, received packet data, packet data to be transmitted, and the like. A separate, removable SIM (not shown) can be provided as well, the SIM storing, for example, a preferred Public Land Mobile Network (PLMN) list and other subscriber-related information. The ROM is assumed, for the purposes of this invention, to store a program enabling the MCU 120 to execute the software routines, layers and protocols required to implement the improved MS LCS procedure n accordance with these teachings, as well as to provide a suitable user interface (UI), via display 140 and keypad 160, with a user. Although not shown, a microphone and speaker are typically provided for enabling the user to conduct voice calls in a conventional manner.

The mobile station 100 also contains a wireless section that includes a digital signal processor (DSP) 180, or equivalent high speed processor or logic, as well as a wireless transceiver that includes a transmitter 200 and a receiver 220, both of which are coupled to an antenna 240 for communication with the network operator. At least one local oscillator (LO) 260, such as a frequency synthesizer, is provided for tuning the transceiver. Data, such as digitized voice and packet data, is transmitted and received through the antenna 240.

It has been realized that the termination of the positioning procedure is in most cases unnecessary, but may be required, as the MS 100 is expected to behave in the same manner for both intra-BSC and inter-BSC HOs, i.e., the MS 100 does not typically know *a priori* when the BSC 40 will be changed during the HO procedure. In all cases in the following Table the positioning procedure is terminated according to current specifications. In the Table are also listed what kind of effects the HO or other RR procedure has on the LCS, and what is required to be done in order to continue the LCS procedure.

| **Positioning method** | **RR Procedure** | **Effect on positioning measurement process** | **Actions required to continue positioning procedure** |
|---|---|---|---|
| (Assisted) GPS | Inter MSC/SGSN handover/CRS | None*# | New serving BSC/SMLC and MSC/SGSN needs to be informed about the ongoing positioning procedure and its parameters (or the MS's response should be send to previous SMLC and MSC/SGSN). |
| | Inter BSC handover/CRS (Intra MSC or SGSN) | | New serving BSC/SMLC needs to be informed about the ongoing positioning procedure and its parameters (or the MS's response should be send to old SMLC). |
| | Intra BSC handover/CRS | | Nothing |
| | Other RR management procedure (=Intra Cell procedure) | None | Nothing |
| E-OTD | Inter MSC/SGSN handover/CRS | Assistance data delivered to MS is not valid anymore. But there is possibility that the MS has already managed to make the majority of the measurements, or MS can internally convert the assistance data to new serving BTS, and the amount of new neighbor BTSs is small, in these cases it would be still possible to continue the measurement procedure in MS under the new serving BTS. # | New serving BSC/SMLC and MSC/SGSN needs to be informed about the ongoing positioning procedure and its parameters (or the MS's response should be send to old SMLC and MSC/SGSN). |
| | Inter BSC handover/CRS (Intra MSC or SGSN) | | New serving BSC/SMLC needs to be informed about the ongoing positioning procedure and its parameters (or the MS's response should be send to the previous SMLC). |
| | Intra BSC handover/CRS | | Nothing |
| | Other RR management procedure (=Intra Cell procedure) | None | Nothing |

| | | | |
|---|---|---|---|
| *Note: this assumes that either GSM to GPS time relation is not included to the assistance data, or the MS manages to utilize the GSM to GPS time relation in the previous cell before the occurrence of the HO. | | | |
| #Note: The standard should allow the MS to send either the measurement response (with valid measurement data), or an error indication (in case the MS cannot perform satisfactory measurements under the new serving BTSs). | | | |

In order to avoid termination of an ongoing LCS procedure due to an occurrence of some RR procedure (e.g. HO or CRS), the LCS process (with the required parameters) is preferably continued from the current serving BSC/RNC/SMLC and MSC(server)/SGSN to the new serving entities with a relocation procedure. It is noted that for the case of intra-BSC procedures this is not required, but the termination of the LCS procedure was not avoidable in R98 and R99 as the MS 100 was required to behave in some predictable manner irrespective of whether there is an inter-BSC/CRS or intra-BSC handover/CRS.

It is preferred that the positioning procedure never be terminated in the case of HO, CRS or some other RR procedure, if the measurement command has been delivered successfully to the MS 100. If the HO or CRS should occur during the transfer of a measurement command (or assistance data) to the MS 100 the positioning procedure may be terminated, or it may be continued, possibly at the choice of the network operator.

### Relocation Procedure with LCS Data

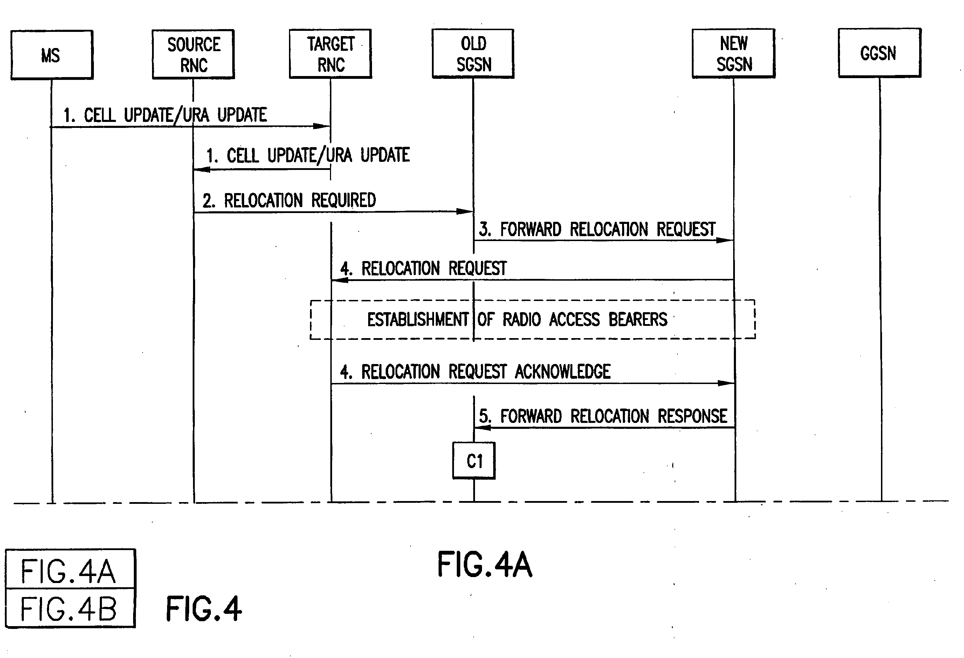

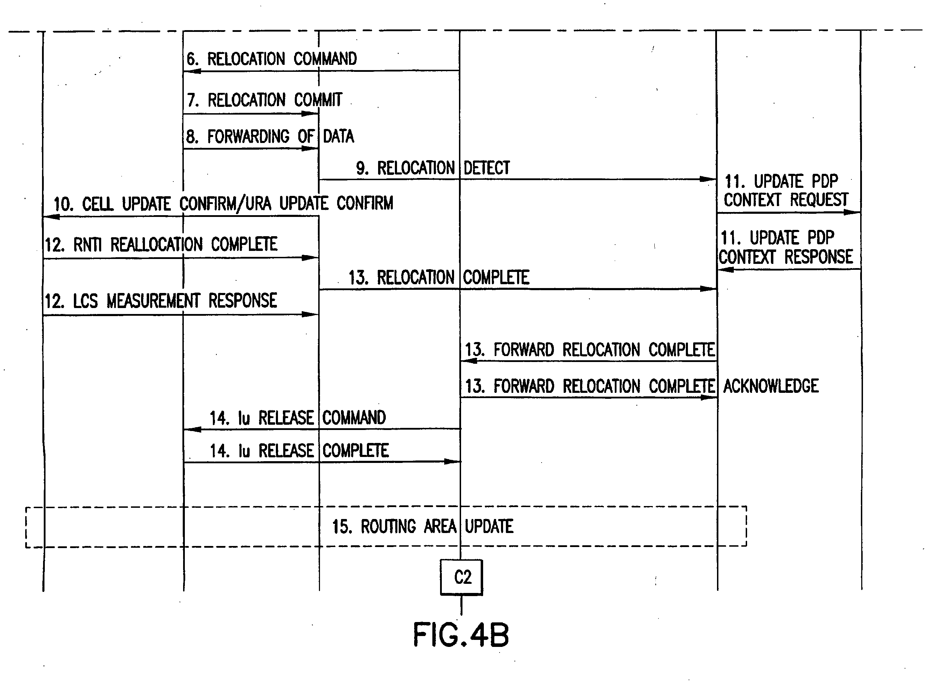

Fig. 4 provides an example of the relocation procedure with LCS data for the case of the Cell Reselection (PS domain) in accordance with an aspect of this invention. Fig. 4 maybe contrasted with the conventional procedure depicted in Fig. 3. In Fig. 4, the MS 100 can be seen to perform a cell update in the new cell first, and after that to send a response to the GPS/E-OTD measurement command (see Step 12X). Other improvements and modifications to the conventional Cell Reselection (PS domain) procedure are made apparent in the ensuing description of Fig. 4. Note should be made, however, that these teachings are not limited for use only with the illustrated Combined Cell/URA/GRA Update and SRNS Relocation procedure for the PS domain procedure, but can be applied as well, by example, to the Combined Hard Handover and SRNS Relocation procedure for the PS domain shown in Fig. 2, and also to the Combined Hard Handover and SRNS Relocation procedure for the CS domain. These teachings apply as well to LCS Reselection in an IP RAN architecture, as will be discussed below.

Referring now to the enumerated process steps shown in Fig. 4, a description of each step is now provided.
1) After having made cell re-selection, the MS 100 sends a Cell Update/URA/GRA Update message to the UTRAN or, in accordance with an aspect of these teachings, to the GERAN. Upon reception of the message, the target RNC/BSC forwards the received message towards the source SRNC via Iur (note that in the following signal flow description a reference to RNC denotes as well the BSC for the GERAN case). The source SRNC then decides to perform a Combined Cell/URA/GRA Update and SRNS Relocation towards the target RNC.
2) The source SRNC initiates the relocation preparation procedure by sending a Relocation Required message (Relocation Type, Cause, Source ID, Target ID, Source RNC to Target RNC Transparent Container) to the old (previous) SGSN. The source SRNC sets the Relocation Type to "UE not involved". The Source RNC to Target RNC Transparent Container includes the necessary information for Relocation co-ordination, security functionality, and RRC protocol context information (including UE Capabilities).
   In accordance with an aspect of this invention, the LCS parameters (e.g., requested LCS QoS, what positioning procedure is active, details of the currently ongoing location process, GMLC Address of the active positioning procedure) may be included in the Relocation Required message in the Source RNC to Target RNC Transparent Container. Note in this regard that the LCS QoS includes, for example, the required location accuracy and the response time. Another, less preferred technique is described below with respect to Step 7.
3) The old SGSN determines from the Target ID if the SRNS Relocation is an intra-SGSN SRNS relocation or an inter-SGSN SRNS relocation. In case of inter-SGSN SRNS relocation the old SGSN initiates the relocation resource allocation procedure by sending a Forward Relocation Request (IMSI, Tunnel Endpoint Identifier Signalling, MM Context, PDP Context, Target Identification, UTRAN Transparent Container, RANAP Cause) message to the new SGSN. At the same time a timer is started on the MM and PDP contexts in the old SGSN, as specified in the Routeing Area Update procedure in the subclause Location Management Procedures (UMTS Only) found in 3G TS 23.060. The Forward Relocation Request message is applicable only in the case of the inter-SGSN SRNS relocation.
4) The new SGSN sends a Relocation Request message (Permanent NAS UE Identity, Cause, CN Domain Indicator, Source RNC to Target RNC Transparent Container, RABs To Be Setup) to the target RNC. For each RAB requested to be established, RABs To Be Setup contain information such as RAB ID, RAB parameters, Transport Layer Address and Iu Transport Association. The RAB ID information element contains the NSAPI value, and the RAB parameters information element gives the QoS profile. The Transport Layer Address is the SGSN Address for user data, and the Iu Transport Association corresponds to Tunnel Endpoint Identifier Data.
   After all necessary resources for accepted RABs, including the Iu user plane, are successfully allocated, the target RNC sends the Relocation Request Acknowledge (RABs setup, RABs failed to setup) message to the new SGSN. The target RNC, for each RAB to be setup (defined by an IP Address and a Tunnel Endpoint Identifier), receives both forwarded downstream PDUs from the source SRNC as well as downstream PDUs from the new SGSN.
   5)When resources for the transmission of user data between the target RNC and the new SGSN have been allocated, and the new SGSN is ready for relocation of SRNS, the Forward Relocation Response message (Cause, RANAP Cause, and Target RNC Information) is sent from new SGSN to old SGSN. This message indicates that the target RNC is ready to receive from the source SRNC the downstream packets not yet acknowledged by the MS 100, i.e., the relocation resource allocation procedure is terminated successfully. RANAP Cause is information from the target RNC to be forwarded to the source RNC. The RAB Setup Information, one information element for each RAB, contains the RNC Tunnel Endpoint Identifier and RNC IP address for data forwarding from the source SRNC to target RNC. If the target RNC or the new SGSN failed to allocate resources the RAB Setup Information element contains only the NSAPI indicating that the source RNC is to release the resources associated with the NSAPI. The Forward Relocation Response message is applicable only in the case of inter-SGSN SRNS relocation.
6) The old SGSN continues the relocation of SRNS by sending a Relocation Command (RABs to be released, and RABs subject to data forwarding) message to the source SRNC. The old SGSN determines the RABs subject to data forwarding based on QoS, and those RABs are contained in RABs subject to data forwarding. For each RAB subject to data forwarding, the information element is specified to contain the RAB ID, Transport Layer Address and Iu Transport Association. The Transport Layer Address and Iu Transport Association is used for forwarding of DL N-PDU from the source RNC to the target RNC.
7) Upon reception of the Relocation Command message from the PS domain, the source RNC starts a data-forwarding timer. When the relocation preparation procedure is terminated successfully, and when the source SRNC is ready, the source SRNC triggers the execution of relocation of SRNS by sending a Relocation Commit (SRNS Contexts) message to the target RNC. The purpose of this procedure is to transfer SRNS contexts from the source RNC to the target RNC. SRNS contexts are sent for each concerned RAB and contain the sequence numbers of the GTP-PDUs next to be transmitted in the uplink and downlink directions, and the next PDCP sequence numbers that would have been used to send and receive data from the MS 100. For connections using the RLC unacknowledged mode the PDCP sequence number is not used.
   In accordance with these teachings, and as was discussed above in Step 2, the LCS parameters may be included in the Relocation Commit message, although this technique is not presently more preferred than including the LCS parameters in the Relocation Required message in the Source RNC to Target RNC Transparent Container.
8) After having sent the Relocation Commit message, the source SRNC begins the forwarding of data for the RABs subject to data forwarding. The data forwarding at SRNS relocation is carried out through the Iu interface, meaning that the data exchanged between the source SRNC and the target RNC are duplicated in the source SRNC and are routed at the IP layer towards the target RNC.
9) The target RNC sends a Relocation Detect message to the new SGSN when the relocation execution trigger is received. For the SRNS relocation type UE Not Involved, the relocation execution trigger is the reception of the Relocation Commit message from the Iur interface. When the Relocation Detect message is sent, the target RNC starts SRNC operation.
10) After having sent the Relocation Detect message, the target SRNC responds to the MS 100 by sending a Cell Update Confirm/URA/GRA Update Confirm message. Both messages contain UE information elements and CN information elements. The UE information elements include among other information the new SRNC identity and S-RNTI. The CN information elements contain among other information the Location Area Identification and Routing Area Identification. This procedure is co-ordinated in all Iu signalling connections existing for the MS.
11) Upon reception of the Relocation Detect message, the CN may switch the user plane from the source RNC to the target SRNC. If the SRNS Relocation is an inter-SGSN SRNS relocation, the new SGSN sends Update PDP Context Request messages (new SGSN Address, SGSN Tunnel Endpoint Identifier, QoS Negotiated) to the GGSNs concerned. The GGSNs update their PDP context fields and return an Update PDP Context Response (GGSN Tunnel Endpoint Identifier) message.
12) When the MS 100 has reconfigured itself, it sends the RNTI Reallocation Complete message to the target SRNC.
12X) In accordance with these teachings, if some positioning procedure was ongoing in the MS 100, the MS 100 sends the response message including successful measurement reports or a failure indication. The message may be sent before of after sending the RNTI Reallocation Complete message. In this manner the ongoing MS 100 positioning procedure is not required to be terminated, thereby overcoming the problems that were discussed above. The measurement results message may be sent by the mobile station before or after sending a GERAN/UTRAN Mobility Information Confirm message from the mobile station to the target BSC/RNC.
13) When the target SRNC receives the RNTI Reallocation Complete message, i.e., the new SRNC-ID + S-RNTI are successfully exchanged with the UE by the radio protocols, the target SRNC initiates the Relocation Complete procedure by sending the Relocation Complete message to the new SGSN. The purpose of the Relocation Complete procedure is to indicate by the target SRNC the completion of the relocation of the SRNS to the CN. If the user plane has not been switched at Relocation Detect, the CN upon reception of Relocation Complete switches the user plane from the source RNC to the target SRNC. If the SRNS Relocation is an inter-SGSN SRNS relocation, the new SGSN signals to the old SGSN the completion of the SRNS relocation procedure by sending a Forward Relocation Complete message.
14) Upon receiving the Relocation Complete message, or if it is an inter-SGSN SRNS relocation; the Forward Relocation Complete message, the old SGSN sends an Iu Release Command message to the source RNC. When the RNC data-forwarding timer started in Step 7 expires the source RNC responds with an Iu Release Complete.
15) After the MS 100 has finished the Cell/URA/GRA update and RNTI reallocation procedure, and if the new Routing Area Identification is different from the old, the MS 100 initiates the Routing Area Update procedure. See in the regard the subclause Location Management Procedures (UMTS Only). Note that it is only a subset of the RA update procedure that is performed, since the MS 100 is in the PMM-CONNECTED state.

### LCS Relocation in IP RAN Architecture

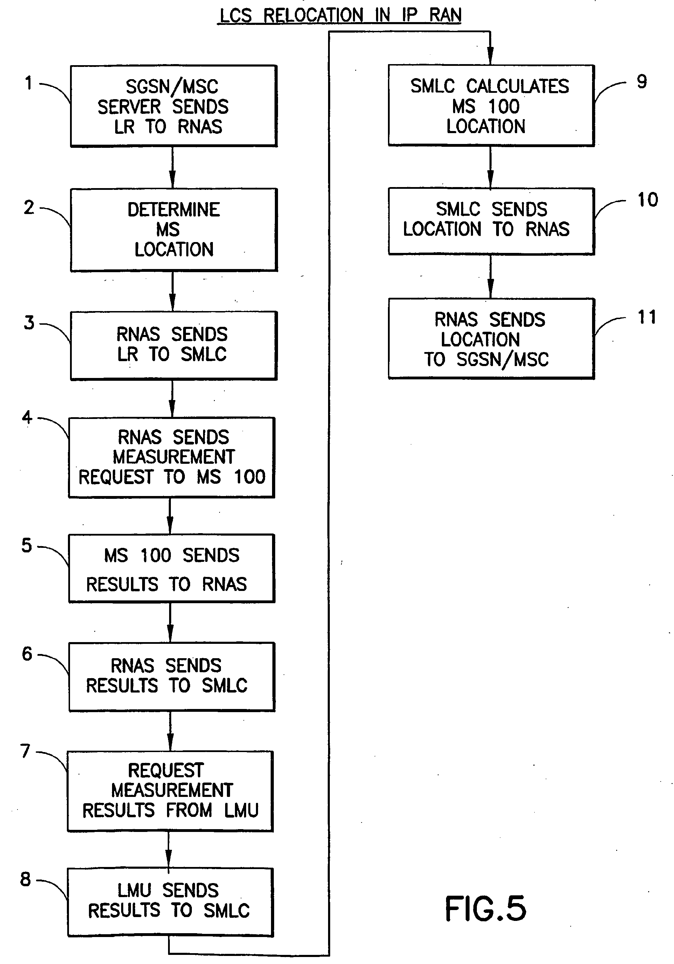

A discussion is now made of the positioning signaling flow in a particular IP RAN architecture. Reference can also be made to Fig. 5 for a discussion of the positioning signaling flow.

It should be noted, however, that this procedure need not be IP RAN specific, and could be employed as a normal positioning procedure in UTRAN (or GERAN) by replacing references to Radio Network Access Server (RNAS) with RNC. It should be noted that the RNAS functionality can be integrated into the BTS functionality.
1) The SGSN/MSC server sends a Location Request to the RNAS.
2) The RNAS knows in which cell the MS 100 is located, or pages the MS 100 to determine the current cell where the MS 100 is located. If the Location Request only requires the service area id the RNAS may send this directly to the SGSN/MSC server without involving the SMLC.
3) The RNAS sends a Location Request to the SMLC. The SMLC determines if the cell accuracy (with possible other available information, such as the current Timing Advance value and the received signal level) is sufficient, and then translates the cell id (and possibly the other avaiable information) into MS 100 location coordinates. Ifbetter accuracy is required, the SMLC requests the RNAS to obtain measurement results of the target MS 100.
4) The RNAS sends a measurement request to the target MS 100.
5) The target MS 100 sends the measurement results to the RNAS.
6) The RNAS sends the measurement results to SMLC.
7) The SMLC requests measurement results from the LMU (or the LMU reports periodically to the SMLC, in which case this step and the next step (8) can be omitted).
8) The LMU sends the measurement results to the SMLC
9) The SMLC calculates the location of the target MS 100.
10) The SMLC sends the location calculation results to the RNAS.
11) The RNAS sends the location result to the SGSN/MSC server.

The IP RAN Architecture has some effect on the LCS relocation procedure in the HO/CRS case. In the IP RAN architecture the SMLC and possibly the RNAS may be maintained the same during the positioning procedure regardless of the HO or CRS (i.e., the occurrence of the HO or CRS does not require a change in the RNAS or the SMLC). This means that in the IP RAN architecture the relocation procedure with the transfer of the LCS parameters is not required, if the RNAS is not changed. In the case where the RNAS is changed, the SMLC would still be the same, and in this case the new RNAS is required to find the SMLC. This can be accomplished if during the relocation procedure the address of the SMLC is transported from the old RNAS to the new RNAS.

It should be noted that absent the use of this invention the MS 100 will always abort the positioning procedure in the case of HO or CRS. This applies as well to the IP RAN architecture discussed above.

It should be appreciated that the improved LCS procedure in accordance with these teachings does not prematurely terminate as often as in the prior art due to an occurrence of some HO, CRS, or other RR procedure, and thereby provides reduced average delays, lower power consumption in the MS 100, and improved service to the end user.

While described in the context of presently preferred and exemplary embodiments of these teachings, those skilled in the art will recognize that changes in form and details may be made, and that these changes will still fall within the scope of these teachings.

## Claims

1. A method of operating a mobile station (100) in cooperation with a network operator, comprising:
upon an occurrence of a Radio Resource RR procedure, that affects the mobile station (100), determining by the mobile station (100) if a location procedure is ongoing in the mobile station (100); and
if it is, completing the location procedure and reporting measurement results in a message from the mobile station (100) to a target radio network controller (40).

2. A method as in claim 1, wherein the location procedure is executed during a Combined Hard Handover and Serving RNS SRNS Relocation procedure for at least one of a Packet Switched PS or a Circuit Switched_CS domain, and applies to both intra-Serving GPRS Support Node_SGSN/Mobile Switching Center MSC SRNS relocation and inter-SGSN/MSC and SRNS relocation.

3. A method as in claim 1, wherein the location procedure is executed during a Combined Cell/ UTRAN Registration Area URA/ GERAN Registration Area GRA Update and SRNS Relocation procedure for a PS domain, and applies to both intra-SGSN SRNS relocation and for inter-SGSN SRNS relocation

4. A method as in claim 1, further comprising sending Location Services LCS parameters from a source Radio Network Controller RNC/ Base Station Controller_BSC to a target RNC/BSC.

5. A method as in claim 4, wherein the LCS parameters are sent in a transparent manner.

6. A method as in claim 4, wherein for a Universal Terrestrial Radio Access Network UTRAN case the LCS parameters are sent in a Source RNC to Target RNC Transparent Container in a Relocation Required message.

7. A method as in claim 1, further comprising sending LCS parameters from a source RNC/BSC to a target RNC/BSC in a Relocation Commit message.

8. A method as in claim 1, further comprising sending LCS parameters to the target RNC in a Forward SRNS Context message.

9. A method as in any one of claims 5 to 8, where the LCS parameters comprise at least one of:
a requested location accuracy;
a requested location response time;
details pertaining to a currently ongoing location process; and
a Gateway Mobile Location Center GMLC address.

10. A method as in claim 1, wherein the message is sent before sending a UTRAN Mobility Information Confirm message from the mobile station to the target RNC/BSC.

11. A method as in claim 1, wherein the message is sent after sending a UTRAN Mobility Information Confirm message from the mobile station to the target RNC/BSC.

12. The method of claim 1 wherein said RR procedure comprises at least one of a Handover HO and a Cell Re-Selection CRS.

13. A wireless communications system (5) having at least one mobile station (100) for communicating with a network operator, comprising a controller (120) in said mobile station (100), responsive to an occurrence of a Radio Resources RR procedure that affects the mobile station (100), the controller (120) being adapted to determine if a location procedure is ongoing in the mobile station (100) and, if it is, to complete the location procedure and report measurement results in a message transmitted from the mobile station (100) to a target radio network controller (40).

14. A system as in claim 13, wherein the location procedure is executed during a Combined Hard Handover and Serving RNS SRNS Relocation procedure for at least one of a Packet Switched_PS or a Circuit Switched_CS domain, and applies to both intra-Serving GPRS Support Node_SGSN/ Mobile Switching Center MSC SRNS relocation and inter-SGSN/MSC and SRNS relocation.

15. A system as in claim 13, wherein the location procedure is executed during a Combined Cell/ UTRAN Registration Area URA/ GERAN Registration Area_GRA Update and SRNS Relocation procedure for a PS domain, and applies to both intra-SGSN SRNS relocation and for inter-SGSN SRNS relocation

16. A system as in claim 13, where the system is adapted to send_Location Services LCS parameters from a source Radio Network Controller RNC/ Base Station Controller BSC to a target RNC/BSC.

17. A system as in claim 16, wherein the system is adapted to send LCS parameters in a transparent manner.

18. A system as in claim 16, wherein for a UTRAN case the system is adapted to send LCS parameters in a Source RNC to Target RNC Transparent Container in a Relocation Required message.

19. A system as in claim 13, where the system is adapted to send LCS parameters from a source RNC/BSC to a target RNC/BSC in a Relocation Commit message.

20. A system as in claim 13, adapted to send LCS parameters to a target RNC/BSC in a Forward SRNS Context message.

21. A system as in claim 17, 18, 19 or 20, where the LCS parameters comprise at least one of:
a requested location accuracy;
a requested location response time;
details pertaining to a currently ongoing location process; and
a Gateway Mobile Location Center GMLC address.

22. A system as in claim 13, adapted to transmit the message before transmitting a UTRAN Mobility Information Confirm message from the mobile station to the target RNC/BSC.

23. A system as in claim 13, adapted to transmit the message after transmitting a UTRAN Mobility Information Confirm message from the mobile station to the target RNC/BSC.

24. The wireless communications system of claim 13, wherein said RR procedure comprises at least one of a Handover HO and a Cell Re-Selection CRS.

25. A computer program product stored on a computer-readable medium and comprising program instructions for causing a data processor to operate with a wireless network (5), comprising operations of:
responsive to an occurrence of a Radio Resources procedure comprising at least one of Handover and Cell Re-selection, and if a Location Services procedure has been started in a mobile station (100), completing the Location Services procedure; and
sending result information regarding the completed Location Services procedure results to a target Radio Network Controller (40).

## Patentansprüche

1. Verfahren zum Betreiben einer Mobilstation (100) in Kooperation mit einem Netzwerkbetreiber, umfassend
- Bestimmen durch die Mobilstation (100), auf das Auftreten eines Funk-Ressourcen-, RR, Vorgangs hin, der die Mobilstation betrifft, ob ein Ortsbestimmungsvorgang in der Mobilstation (100) abläuft; und
- falls dem so ist, Abschließen des Ortsbestimmungsvorgangs und Melden von Messergebnissen in einer Nachricht von der Mobilstation (100) an einen Ziel-Funknetzkontroller (40).

2. Verfahren nach Anspruch 1, wobei der Ortsbestimmungsvorgang während einem kombinierten Hard Handover und Serving RNS, SRNS, Relocation-Vorgang für mindestens eine von einer paketvermittelten, PS, oder einer leitungsvermittelten, CS, Domäne ausgeführt wird, und sich sowohl auf Intra-Serving GPRS Support Node, SGSN / Mobile Switching Center, MSC, SRNS Relocation als auch Inter-SGSN / MSC und SRNS Relocation bezieht.

3. Verfahren nach Anspruch 1, wobei der Ortsbestimmungsvorgang während einem kombinierten Zell / UTRAN Registration Area, URA / GERAN Registration Area, GRA, Aktualisierungs- und SRNS Relocation-Vorgang für eine PS-Domäne ausgeführt wird, und sich sowohl auf Intra-SGSN SRNS Relocation als auch Inter-SGSN SRNS Relocation bezieht.

4. Verfahren nach Anspruch 1, weiter umfassend
- Senden von Ortbestimmungsdienst-, LCS, Parametern von einem Ausgangs-Funknetzkontroller, RNC / Basisstationskontroller, BSC, an einen Ziel-RNC / BSC.

5. Verfahren nach Anspruch 4, wobei die LCS-Parameter in transparenter Weise gesendet werden.

6. Verfahren nach Anspruch 4, wobei für den Fall eines Universal Terrestrial Radio Access Network, UTRAN, die LCS-Parameter in einem Ausgangs-RNC an Ziel-RNC Transparent Container in einer Relocation Required Nachricht gesendet werden.

7. Verfahren nach Anspruch 1, weiter umfassend
- Senden von LCS-Parametern von einem Ausgangs-RNC / BSC an einen Ziel-RNC / BSC in einer Relocation Commit Nachricht.

8. Verfahren nach Anspruch 1, weiter umfassend
- Senden von LCS-Parametern an den Ziel-RNC in einer Forward SRNS Context Nachricht.

9. Verfahren nach irgendeinem der Ansprüche 5 bis 8, wobei die LCS-Parameter mindestens eins umfassen von:
- eine angeforderte Ortbestimmungsgenauigkeit;
- eine angeforderte Ortbestimmungs-Antwortzeit;
- Details, die sich auf einen derzeit laufenden Ortsbestimmungsvorgang beziehen; und
- eine Gateway Mobile Location Center, GMLC, Adresse.

10. Verfahren nach Anspruch 1, wobei die Nachricht gesendet wird, bevor eine UTRAN Mobility Information Confirm Nachricht von der Mobilstation an den Ziel-RNC / BSC gesendet wird.

11. Verfahren nach Anspruch 1, wobei die Nachricht gesendet wird, nachdem eine UTRAN Mobility Information Confirm Nachricht von der Mobilstation an den Ziel-RNC / BSC gesendet wird.

12. Verfahren nach Anspruch 1, wobei der RR Vorgang mindestens eines von einem Handover, HO, und einer Zellen-Neuauswahl, CRS, umfasst.

13. Drahtloses Kommunikationssystem (5) mit mindestens einer Mobilstation (100) zur Kommunikation mit einem Netzwerkbetreiber, umfassend einen Kontroller (120) in der Mobilstation (100), der auf das Auftreten eines Funk-Ressourcen-, RR, Vorgangs anspricht, der die Mobilstation (100) betrifft, wobei der Kontroller (120) angepasst ist, um zu bestimmen, ob ein Ortsbestimmungsvorgang in der Mobilstation (100) abläuft, und falls dem so ist, den Ortsbestimmungsvorgang abzuschließen und Messergebnisse in einer Nachricht zu melden, die von der Mobilstation (100) an einen Ziel-Funknetzkontroller (40) gesendet wird.

14. System nach Anspruch 13, wobei der Ortsbestimmungsvorgang während einem kombinierten Hard Handover und Serving RNS, SRNS, Relocation-Vorgang für mindestens eine von einer paketvermittelten, PS, oder einer leitungsvermittelten, CS, Domäne ausgeführt wird, und sich sowohl auf Intra-Serving GPRS Support Node, SGSN / Mobile Switching Center, MSC, SRNS Relocation als auch Inter-SGSN / MSC und SRNS Relocation bezieht.

15. System nach Anspruch 13, wobei der Ortsbestimmungsvorgang während einem kombinierten Zell / UTRAN Registration Area, URA / GERAN Registration Area, GRA, Aktualisierungs- und SRNS Relocation-Vorgang für eine PS-Domäne ausgeführt wird, und sich sowohl auf Intra-SGSN SRNS Relocation als auch Inter-SGSN SRNS Relocation bezieht.

16. System nach Anspruch 13, wobei das System angepasst ist zum Senden von Ortsbestimmungsdienst-, LCS, Parametern von einem Ausgangs-Funknetzkontroller, RNC / Basisstationskontroller, BSC, an einen Ziel-RNC / BSC.

17. System nach Anspruch 16, wobei das System angepasst ist, LCS-Parameter in transparenter Weise zu senden.

18. System nach Anspruch 16, wobei für den Fall eines Universal Terrestrial Radio Access Network, UTRAN, das System angepasst ist, LCS-Parameter in einem Ausgangs-RNC an Ziel-RNC Transparent Container in einer Relocation Required Nachricht zu senden.

19. System nach Anspruch 13, wobei das System angepasst ist zum Senden von LCS-Parametern von einem Ausgangs-RNC / BSC an einen Ziel-RNC / BSC in einer Relocation Commit Nachricht.

20. System nach Anspruch 13, angepasst zum Senden von LCS-Parametern an einen Ziel-RNC / BSC in einer Forward SRNS Context Nachricht.

21. System nach irgendeinem der Ansprüche 17, 18, 19 oder 20, wobei die LCS Parameter mindestens eins umfassen von:
- eine angeforderte Ortsbestimmungsgenauigkeit;
- eine angeforderte Ortsbestimmungs-Antwortzeit;
- Details, die sich auf einen derzeit laufenden Ortsbestimmungsvorgang beziehen; und
- eine Gateway Mobile Location Center, GMLC, Adresse.

22. System nach Anspruch 13, angepasst zum Senden der Nachricht, bevor eine UTRAN Mobility Information Confirm Nachricht von der Mobilstation an den Ziel-RNC / BSC gesendet wird.

23. System nach Anspruch 13, angepasst zum Senden der Nachricht, nachdem eine UTRAN Mobility Information Confirm Nachricht von der Mobilstation an den Ziel-RNC / BSC gesendet wird.

24. System nach Anspruch 13, wobei der RR-Vorgang mindestens eines von einem Handover, HO, und einer Zellen-Neuauswahl, CRS, umfasst.

25. Computerprogrammprodukt, gespeichert auf einem computerlesbaren Medium und umfassend Programmanweisungen, um einen Datenprozessor zu veranlassen, mit einem drahtlosen Netzwerk (5) zu arbeiten, umfassend die Vorgänge:
- auf das Auftreten eines Funk-Ressourcen-, RR, Vorgangs hin, der mindestens eins von Handover und Zellen-Neuauswahl umfasst, und falls ein Ortsbestimmungsdienst-Vorgang in einer Mobilstation (100) gestartet worden ist, Abschließen des Ortsbestimmungsdienstvorgangs; und
- Senden von Ergebnisinformationen, die Ergebnisse des abgeschlossenen Ortsbestimmungsdienst-Vorgangs betreffen, an einen Ziel-Funknetzkontroller (40).

## Revendications

1. Procédé d'exploitation d'une station mobile (100) en coopération avec un opérateur de réseau, comprenant :
à la survenance d'une procédure de Ressources Radio RR, qui concerne la station mobile (100), la détermination par la station mobile (100) si une procédure de localisation est en cours dans la station mobile (100), et
si tel est le cas, l'achèvement de la procédure de localisation et le compte rendu des résultats de mesure dans un message de la station mobile (100) à un contrôleur de réseau radio cible (40).

2. Procédé selon la revendication 1, dans lequel la procédure de localisation est effectuée au cours d'une procédure de transfert intercellulaire combiné et de relocalisation RNS SRNS de desserte pour au moins l'un d'un domaine à commutation de paquets PS ou d'un domaine à commutation de circuit CS, et s'applique à la fois à la relocalisation SRNS et à la relocalisation inter SGSN/MSC et SRNS au noeud de support GPRS de desserte SGSN ou au centre de commutation mobile MSC.

3. Procédé selon la revendication 1, dans lequel la procédure de localisation est effectuée au cours d'une procédure combinée de mise à jour de cellule, de zone d'enregistrement UTRAN URA ou de zone d'enregistrement GERAN GRA et de relocalisation SRNS pour un domaine PS, et s'applique à la fois à la relocalisation intra SGSN SRNS et à la relocalisation inter SGSN SRNS.

4. Procédé selon la revendication 1, comprenant en outre l'envoi de paramètres de services de localisation LCS d'un contrôleur de réseau radio RNC ou d'un contrôleur de station de base BSC source à un RNC ou BSC cible.

5. Procédé selon la revendication 4, dans lequel les paramètres LCS sont envoyés d'une manière transparente.

6. Procédé selon la revendication 4, dans lequel pour un cas de réseau d'accès radio universel terrestre UTRAN, les paramètres LCS sont envoyés dans un RNC source à un conteneur transparent RNC cible dans un message de relocalisation requise.

7. Procédé selon la revendication 1, comprenant en outre l'envoi des paramètres LCS d'un RNC/BSC source à un RNC/BSC cible dans un message d'engagement de relocalisation.

8. Procédé selon la revendication 1, comprenant en outre l'envoi des paramètres LCS au RNC cible dans un message de contexte SRNS de transfert.

9. Procédé selon l'une quelconque des revendications 5 à 8, dans lequel les paramètres LCS comprennent au moins l'un de :
une précision de localisation demandée ;
un temps de réponse de localisation demandée ;
des détails concernant un processus de localisation actuellement en cours ; et
une adresse de centre de localisation mobile de passerelle GMLC.

10. Procédé selon la revendication 1, dans lequel le message est envoyé avant l'envoi d'un message de confirmation des informations de mobilité UTRAN de la station mobile au RNC/BSC cible.

11. Procédé selon la revendication 1, dans lequel le message est envoyé après l'envoi d'un message de confirmation des informations de mobilité UTRAN de la station mobile au RNC/BSC cible.

12. Procédé selon la revendication 1, dans lequel ladite procédure RR comprend au moins l'un d'un transfert HO et d'une re-sélection de cellule CRS.

13. Système de communications sans fil (5) muni d'au moins une station mobile (100) pour la communication avec un opérateur de réseau, comprenant un contrôleur (120) dans ladite station mobile (100), en réponse à une survenance d'une procédure de ressources radio RR qui concerne la station mobile (100), le contrôleur (120) étant adapté pour déterminer si une procédure de localisation est en cours dans la station mobile (100), et si tel est le cas, pour achever la procédure de localisation et rendre compte des résultats de mesure dans un message transmis de la station mobile (100) à un contrôleur de réseau radio (40) cible.

14. Système selon la revendication 13, dans lequel la procédure de localisation est effectuée au cours d'une procédure de transfert intercellulaire combiné et de relocalisation RNS SRNS de desserte pour au moins l'un d'un domaine à commutation de paquets PS ou d'un domaine à commutation de circuit CS, et s'applique à la fois à la relocalisation SRNS et à la relocalisation inter SGSN/MSC et SRNS au noeud de support GPRS de desserte SGSN ou au centre de commutation mobile MSC.

15. Système selon la revendication 13, dans lequel la procédure de localisation est effectuée au cours d'une procédure combinée de mise à jour de cellule, de zone d'enregistrement UTRAN URA ou de zone d'enregistrement GERAN GRA et de relocalisation SRNS pour un domaine PS, et s'applique à la fois à la relocalisation intra SGSN SRNS et à la relocalisation inter SGSN SRNS.

16. Système selon la revendication 13, dans lequel le système est adapté pour l'envoi de paramètres de services de localisation LCS d'un contrôleur de réseau radio RNC ou d'un contrôleur de station de base BSC source à un RNC ou BSC cible.

17. Système selon la revendication 16, dans lequel le système est adapté pour envoyer des paramètres LCS d'une manière transparente.

18. Système selon la revendication 16, dans lequel pour un cas UTRAN, le système est adapté pour envoyer des paramètres LCS dans un RNC source à un conteneur transparent RNC cible dans un message de relocalisation requise.

19. Système selon la revendication 13, dans lequel le système est adapté pour envoyer des paramètres LCS d'un RNC/BSC source à un RNC/BSC cible dans un message d'engagement de relocalisation.

20. Système selon la revendication 13, adapté pour envoyer des paramètres LCS au RNC/BSC cible dans un message de contexte SRNS de transfert.

21. Système selon les revendications 17, 18, 19 ou 20, dans lequel les paramètres LCS comprennent au moins l'un de :
une précision de localisation demandée ;
un temps de réponse de localisation demandée ;
des détails concernant un processus de localisation actuellement en cours ; et
une adresse de centre de localisation mobile de passerelle GMLC.

22. Système selon la revendication 13, adapté pour transmettre le message avant l'envoi d'un message de confirmation des informations de mobilité UTRAN de la station mobile au RNC/BSC cible.

23. Système selon la revendication 13, adapté pour transmettre le message après l'envoi d'un message de confirmation des informations de mobilité UTRAN de la station mobile au RNC/BSC cible.

24. Système de communications sans fil selon la revendication 13, dans lequel ladite procédure RR comprend au moins l'un d'un transfert HO et d'une re-sélection de cellule CRS.

25. Produit de programme d'ordinateur stocké sur un support lisible par ordinateur et comprenant des instructions de programme pour faire fonctionner un processeur de données avec un réseau sans fil (5), comprenant les opérations consistant à :
en réponse à une survenance d'une procédure de ressources radio RR comprenant au moins l'un d'un transfert et d'une re-sélection de cellule, et si une procédure de services de localisation a été commencée dans la station mobile (100), achever la procédure de services de localisation ; et
envoyer des informations de résultat concernant les résultats de la procédure de services de localisation achevée à un contrôleur de réseau radio cible (40).
